# FASCICULE DE BREVET EUROPEEN

(11) **EP 3 665 000 B1**
(45) Date de publication et mention de la délivrance du brevet: **06.10.2021**
(21) Numéro de dépôt: 18780194.9
(22) Date de dépôt: 14.09.2018
(51) Int. Cl.: B30B 11/00, B22F 3/15, B30B 15/28, B30B 15/34

(54) **REFROIDISSEMENT DE SECOURS DE PRESSE ISOSTATIQUE A CHAUD**
RESERVEKÜHLUNG FÜR HEISSISOSTATISCHE PRESSE
BACKUP COOLING FOR HOT ISOSTATIC PRESS

(30) Priorité: 18.09.2017 FR 1758636
(43) Date de publication de la demande: 17.06.2020
(73) Titulaire: Commissariat à l'Énergie Atomique et aux Énergies Alternatives, 75015 Paris (FR)
(72) Inventeur: JAOUEN, Alain, 37260 Monts (FR); AUTISSIER, Denis, 37550 Saint Avertin (FR)
(74) Mandataire: Brevalex
(86) Numéro de dépôt international: PCT/FR2018/052259
(87) Numéro de publication internationale: WO 2019/053386

(56) Documents cités:
- CN-U- 201 912 951
- JP-A- S6 117 892
- JP-A- H01 230 986
- SU-A1- 424 660
- US-A- 4 301 320

## Description

### DOMAINE TECHNIQUE

La présente invention concerne de manière générale le domaine des presses isostatiques à chaud, dites HIP d'après l'anglais « Hot Isostatic Pressing », ou de manière équivalente de la compaction isostatique à chaud dite CIC.

Elle concerne plus particulièrement le refroidissement de secours d'une presse isostatique à chaud.

### ETAT DE LA TECHNIQUE ANTERIEURE

Le refroidissement de secours sur une presse isostatique à chaud est mis en service suite à une alarme technique au cours de l'utilisation de la presse, telle que par exemple une coupure d'urgence, un défaut d'alimentation électrique de la presse ou un défaut d'une pompe de circulation.

Une première méthode connue pour assurer un refroidissement de secours sur une presse isostatique à chaud utilise de l'eau perdue. Le fait de refroidir à eau perdue génère des rejets d'eau industrielle et impose par la suite une vidange du circuit de refroidissement et un remplissage avec des produits inhibiteurs de corrosion.

Une deuxième méthode connue pour assurer un refroidissement de secours sur une presse isostatique à chaud utilise des groupes électrogènes pour maintenir en fonction les pompes de circulation. L'utilisation de groupes électrogènes génère un surcout financier et nécessite une maintenance accrue. Le document JP S61 178 92 A décrit un dispositif de refroidissement de secours destiné à une presse isostatique à chaud.

### EXPOSE DE L'INVENTION

L'invention vise à résoudre les problèmes de la technique antérieure en fournissant un dispositif de refroidissement de secours destiné à une presse isostatique à chaud selon la revendication 1, la presse comportant une enceinte de compression, un réservoir d'un gaz et un premier circuit de circulation du gaz entre le réservoir de gaz et l'enceinte de compression,
caractérisé en ce qu'il comporte :
un réservoir d'un liquide de refroidissement équipé d'un premier échangeur de chaleur entre le gaz et le liquide de refroidissement,
un circuit de circulation du liquide de refroidissement formant une boucle fermée incluant le réservoir et un circuit de refroidissement disposé autour de l'enceinte de compression,
un second circuit de circulation du gaz, s'étendant à partir d'une vanne de liaison au premier circuit de circulation du gaz, et incluant le premier échangeur de chaleur,
un module de commande apte à piloter la vanne de liaison pour l'ouvrir en cas de défaut de fonctionnement de la presse isostatique à chaud, et la fermer sinon.

Grâce à l'invention, le refroidissement de secours de la presse isostatique à chaud est réalisé de manière autonome à partir de l'énergie pneumatique stockée dans la presse.

Le dispositif utilise l'énergie générée par la détente du gaz comprimé pour assurer la circulation du fluide de refroidissement ainsi que son rafraichissement. Le dispositif permet un fonctionnement du circuit de refroidissement en circuit fermé.

Selon une caractéristique préférée, le circuit de circulation du liquide de refroidissement comporte en outre une première pompe de circulation actionnée par la circulation du gaz dans le second circuit de circulation du gaz.

Selon une caractéristique préférée, le module de commande pilote également la vanne de liaison pour la fermer si la température du gaz au niveau de l'entrée du premier échangeur de chaleur est inférieure à une première valeur prédéterminée.

Selon une caractéristique préférée, le module de commande pilote également la vanne de liaison pour l'ouvrir si la température du liquide de refroidissement autour de l'enceinte est supérieure à une deuxième valeur prédéterminée.

Selon une caractéristique préférée, le dispositif de refroidissement de secours comporte un second échangeur de chaleur entre le gaz et le liquide de refroidissement, placé au niveau de l'entrée du circuit de circulation du liquide de refroidissement dans le réservoir de liquide de refroidissement.

Selon une caractéristique préférée, la vanne de liaison est une vanne normalement ouverte.

Selon une caractéristique préférée, le premier circuit de circulation du gaz comporte également une vanne de sortie de l'enceinte de compression et une vanne de sortie du réservoir de gaz, et en ce que le module de commande est apte à piloter la vanne de sortie de l'enceinte de compression pour l'ouvrir et la vanne de sortie du réservoir de gaz pour la fermer, en cas de défaut de fonctionnement de la presse isostatique à chaud et tant que la pression du gaz dans le second circuit de circulation du gaz est supérieure à une valeur prédéterminée.

Selon une caractéristique préférée, le module de commande est apte à piloter la vanne de sortie de l'enceinte de compression pour la fermer et la vanne de sortie du réservoir de gaz pour l'ouvrir, en cas de défaut de fonctionnement de la presse isostatique à chaud et lorsque la pression du gaz dans le second circuit de circulation du gaz est inférieure à la valeur prédéterminée.

Selon un mode de réalisation, le dispositif de refroidissement de secours comporte un circuit de circulation d'air comprimé comportant successivement un réservoir d'air comprimé, une vanne de sortie du réservoir d'air comprimé, un troisième échangeur de chaleur dans le réservoir de liquide de refroidissement et un échappement, en ce que le module de commande est apte à piloter la vanne de sortie de l'enceinte de compression pour la fermer et la vanne de sortie du réservoir d'air comprimé pour l'ouvrir, en cas de défaut de fonctionnement de la presse isostatique à chaud et lorsque la pression du gaz dans le second circuit de circulation du gaz est inférieure à la valeur prédéterminée.

Selon une caractéristique préférée, le dispositif de refroidissement de secours comporte un quatrième échangeur de chaleur entre l'air comprimé et le liquide de refroidissement, placé au niveau de l'entrée du circuit de circulation du liquide de refroidissement dans le réservoir de liquide de refroidissement.

Selon une caractéristique préférée, le circuit de circulation du liquide de refroidissement comporte en outre une seconde pompe de circulation actionnée par la circulation de l'air comprimé dans le circuit de circulation d'air comprimé.

L'invention concerne aussi une presse isostatique à chaud équipée d'un dispositif de refroidissement de secours tel que précédemment présenté.

L'invention concerne aussi un procédé de refroidissement de secours destiné à une presse isostatique à chaud selon la revendication 13, la presse comportant une enceinte de compression, un réservoir d'un gaz et un premier circuit de circulation du gaz entre le réservoir de gaz et l'enceinte de compression,
caractérisé en ce qu'il comporte des étapes de :
- détection d'une alarme technique au cours du fonctionnement de la presse isostatique à chaud,
- mise en communication de l'enceinte de compression avec un second circuit de circulation de gaz, s'étendant à partir d'une vanne de liaison au premier circuit de circulation du gaz, et incluant un premier échangeur de chaleur disposé dans un réservoir d'un liquide de refroidissement, un circuit de circulation du liquide de refroidissement formant une boucle fermée incluant le réservoir et un circuit de refroidissement disposé autour de l'enceinte de compression.

La presse isostatique à chaud et le procédé présentent des avantages analogues à ceux précédemment présentés.

Dans un mode particulier de réalisation, les étapes du procédé selon l'invention sont mises en œuvre par des instructions de programme d'ordinateur.

En conséquence, l'invention vise aussi un programme d'ordinateur sur un support d'informations, ce programme étant susceptible d'être mis en œuvre dans un ordinateur, ce programme comportant des instructions adaptées à la mise en œuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions de programme d'ordinateur adaptées à la mise en œuvre des étapes d'un procédé tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé selon l'invention.

### BREVE DESCRIPTION DES DESSINS

D'autres caractéristiques et avantages apparaîtront à la lecture de la description suivante d'un mode de réalisation préféré, donné à titre d'exemple non limitatif, décrit en référence aux figures dans lesquelles :
La figure 1 représente une presse isostatique à chaud équipée d'un dispositif de refroidissement de secours, selon un premier mode de réalisation de l'invention ;
La figure 2 représente une presse isostatique à chaud équipée d'un dispositif de refroidissement de secours, selon un deuxième mode de réalisation de l'invention ;
La figure 3 représente un procédé de refroidissement de secours d'une presse isostatique à chaud, selon un mode de réalisation de l'invention ; et
La figure 4 représente un module de surveillance et de commande mis en œuvre dans un dispositif de refroidissement de secours, selon un mode de réalisation de l'invention.

### EXPOSE DETAILLE DE MODES DE REALISATION PARTICULIERS

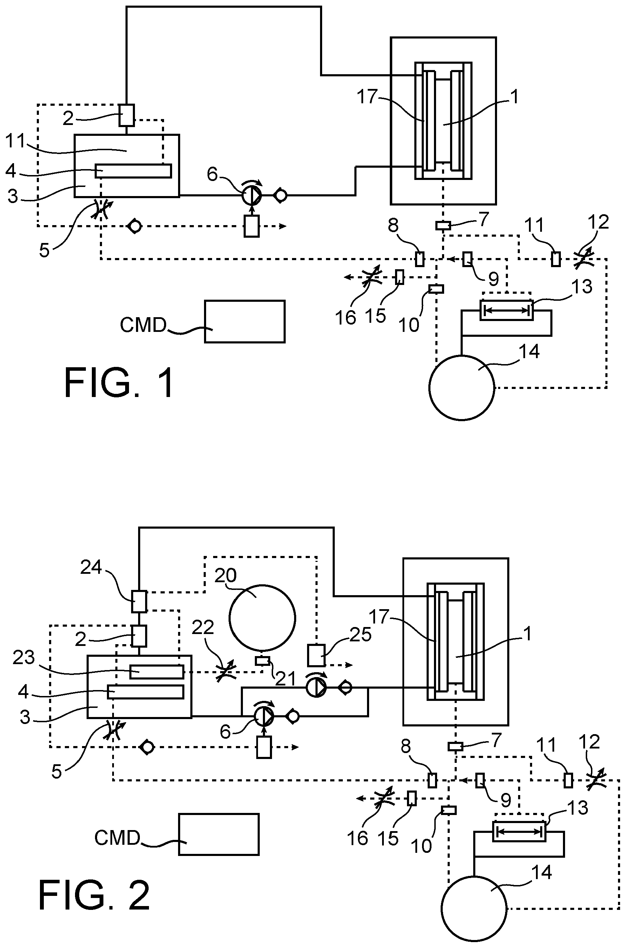

Selon un mode de réalisation préféré, représenté à la **figure** 1, une presse isostatique à chaud est équipée d'un dispositif de refroidissement de secours.

La presse isostatique à chaud en elle-même est classique, et seuls les éléments essentiels à la compréhension de l'invention sont décrits et représentés. En particulier, la presse isostatique à chaud comporte un dispositif de chauffage connu en soi, non représenté.

La presse isostatique à chaud comporte une enceinte de compression 1, résistante à la pression et destinée à recevoir un objet à traiter.

L'enceinte de compression 1 reçoit un gaz inerte de traitement, par exemple de l'argon, pour réaliser une compression isostatique à chaud. Pour cela, un premier circuit de circulation de gaz inerte comporte un réservoir de gaz 14 et un réseau de conduites associées à des vannes et à un multiplicateur de pression 13.

Plus précisément, pour amener le gaz dans l'enceinte de compression 1, une sortie du réservoir 14 est reliée au multiplicateur de pression 13 qui lui-même est relié à une vanne normalement fermée 9. La vanne 9 est reliée à une vanne normalement ouverte 7 qui est elle-même reliée à une entrée de l'enceinte de compression 1.

Inversement, pour amener le gaz de la presse vers le réservoir 14, la vanne 7 est également reliée à une vanne de décompression 11, elle-même reliée à une vanne de régulation 12. La vanne de régulation 12 est reliée au réservoir 14.

La vanne 7 est également reliée à une vanne de mise à l'échappement 15 elle-même reliée à un orifice calibré 16 amenant à l'atmosphère ambiante, de manière à faire baisser la pression dans l'enceinte 1, en cas de besoin. Le réservoir 14 est pourvu, à partir d'une autre sortie du réservoir 14, d'une vanne normalement ouverte 10 reliée entre les vannes 7 et 9.

Selon l'invention, un circuit de circulation du gaz inerte s'étend à partir d'une vanne normalement ouverte 8 reliée entre les vannes 7 et 9 du premier circuit de circulation du gaz inerte.

La vanne normalement ouverte 8 est reliée à un système de détente 5 lui-même relié à un premier échangeur de chaleur 4 placé dans un réservoir 3 de liquide de refroidissement. Le réservoir de liquide de refroidissement est dimensionné en fonction des caractéristiques de la presse. Il est généralement de forte contenance, par exemple de l'ordre de quelques mètres cubes, afin de bénéficier d'une bonne inertie. Il est possible de prévoir en outre un ailettage du réservoir pour améliorer le refroidissement de ce dernier par un échange de chaleur avec l'air ambiant.

Le premier échangeur de chaleur 4 est relié à un second échangeur de chaleur 2 disposé à l'extérieur du réservoir 3.

Le second échangeur de chaleur 2 est relié à un actionneur d'une pompe de circulation 6, par exemple une pompe alternative à membrane fonctionnant à l'aide d'un gaz sous pression. L'actionneur a une sortie qui est un échappement dans l'atmosphère ambiante.

Selon l'invention, un circuit de circulation du liquide de refroidissement forme une boucle fermée incluant le réservoir 3 et un circuit de refroidissement 17 disposé autour de l'enceinte de compression 1.

Plus précisément, dans le sens de circulation allant du plus chaud au plus froid du liquide de refroidissement, une sortie du circuit de refroidissement 17 disposé autour de l'enceinte de compression 1 est reliée à l'échangeur de chaleur 2. L'échangeur de chaleur 2 est relié au réservoir 3 de liquide de refroidissement et se trouve en amont de celui-ci en ce qui concerne la circulation du liquide de refroidissement. Une sortie du réservoir 3 de liquide de refroidissement est reliée à la pompe de circulation 6 qui est elle-même reliée à une entrée du circuit de refroidissement 17 disposé autour de l'enceinte de compression 1.

Un module de surveillance et de commande CMD reçoit des informations sur le fonctionnement de la presse isostatique à chaud, notamment des informations de pression, de température et des grandeurs électriques. Pour cela, le module de surveillance et de commande CMD est relié à des capteurs connus en eux-mêmes et non représentés. Le module de surveillance et de commande CMD est également relié à une alimentation électrique non représentée, par exemple une batterie, pour mettre sous tension ou non les vannes et ainsi commander leur ouverture ou leur fermeture. Par exemple, la mise sous tension d'une vanne normalement fermée permet de l'ouvrir et la mise sous tension d'une vanne normalement ouverte permet de la fermer.

Le fonctionnement du dispositif de refroidissement de secours de la presse isostatique à chaud est ainsi piloté par le module de surveillance et de commande CMD. Le pilotage est réalisé soit de manière informatique, ce qui privilégie l'aspect surveillance du système, ou soit en logique câblée, ce qui privilégie la sécurité des personnes.

Le fonctionnement du dispositif de refroidissement de secours est le suivant.

Lors d'un fonctionnement normal de la presse isostatique à chaud, la vanne normalement ouverte 8 est maintenue pilotée, c'est-à-dire qu'elle est fermée. En d'autres termes, le dispositif de refroidissement de secours est désactivé. L'enceinte de compression est par exemple à une pression de l'ordre de 3000 bars et une température de 1700° C.

Le module de surveillance et de commande CMD détecte une alarme technique telle que par exemple une coupure d'urgence, un défaut d'alimentation électrique de la presse au cours de son utilisation ou un défaut d'une pompe de circulation. Le dispositif de refroidissement de secours est déclenché en cas d'alarme technique.

Dans une première phase, l'enceinte de compression est utilisée comme une réserve haute pression de gaz. Le gaz est utilisé pour le refroidissement par détente et la circulation du liquide de refroidissement.

Les vannes normalement fermées 9 et 10 sont mises hors tension, de manière à les fermer. Le réservoir de gaz 14 est ainsi isolé du reste de l'installation.

Après une temporisation, l'enceinte de compression 1 est mise en communication avec le circuit de circulation de gaz destiné au refroidissement de secours. Pour cela, les vannes normalement ouvertes 7 et 8 sont mises hors tension, de manière à les ouvrir. Le système de détente 5 est ainsi mis sous pression par le gaz de l'enceinte de compression 1.

Il est à noter que la décompression du gaz dans l'enceinte de compression 1 provoque déjà une baisse de la température. La vanne 8 est pilotée pour éviter un risque de givrage au niveau de la conduite entre l'enceinte de compression 1 et l'échangeur de chaleur 4. Ainsi, la vanne 8 est fermée si la température du gaz inerte au niveau de l'entrée du premier échangeur de chaleur 4 est inférieure à une première valeur prédéterminée.

La vanne 8 est également pilotée en fonction de la température du liquide de refroidissement autour de l'enceinte de compression. Ainsi, la vanne 8 est ouverte si la température du liquide de refroidissement autour de l'enceinte de compression est supérieure à une deuxième valeur prédéterminée.

Le gaz arrive à l'échangeur de chaleur 4 en subissant une détente qui abaisse sa température, ce qui refroidit le liquide de refroidissement dans le réservoir 3.

Le gaz poursuit son parcours au travers de l'échangeur 2 et subit une deuxième détente ce qui permet un abaissement de la température du liquide de refroidissement en entrée de réservoir 3.

Une fois détendu, le gaz est dirigé vers l'actionneur de la pompe de circulation 6 avant rejet à l'extérieur de l'installation. La pompe de circulation 6 est ainsi actionnée pour faire circuler le liquide de refroidissement dans son circuit.

Le liquide de refroidissement qui circule dans son circuit fermé sort de la presse, subit ainsi un refroidissement dans l'échangeur 2 puis dans l'échangeur 4 et est réinjecté dans la presse.

Dans une deuxième phase, le réservoir 14 est utilisé comme une réserve haute pression de gaz. Cela se produit lorsque la pression du gaz provenant de l'enceinte de compression 1 devient inférieure à une valeur permettant l'actionnement de la pompe 6, par exemple 8 bars. Le réservoir 14 est mis en communication avec le circuit de circulation de gaz destiné au refroidissement de secours. Pour cela, la vanne 7 est alors mise sous tension pour être fermée et la vanne 10 est mise hors tension pour être ouverte. Ainsi, l'enceinte de compression est isolée et le réservoir 14 est relié au système de détente 5. Le gaz stocké dans le réservoir 14 est alors utilisé dans le dispositif de refroidissement de secours pour le refroidissement et la circulation du liquide de refroidissement.

Le refroidissement de secours est mis en œuvre jusqu'à ce qu'une température de sécurité de l'enceinte soit atteinte.

La **figure** 2 représente un second mode de réalisation de dispositif de refroidissement de secours destiné à une presse isostatique à chaud selon l'invention.

Ce mode de réalisation comporte des éléments identiques à ceux du premier mode de réalisation décrit en référence à la figure 1. Ces éléments portent les mêmes références numériques et ne sont pas décrits à nouveau. Seules les différences entre les deux modes de réalisation sont détaillées.

Le dispositif comporte un circuit de circulation d'air comprimé. Ce circuit comporte un réservoir 20 d'air comprimé, par exemple à une pression de 200 bars. Le réservoir 20 est relié à une vanne normalement ouverte 21 elle-même reliée à un système de détente 22.

Le système de détente 22 est relié à un troisième échangeur de chaleur 23 situé dans le réservoir de liquide de refroidissement 3. Le troisième échangeur de chaleur 23 est relié à un quatrième échangeur de chaleur 24 situé à l'extérieur du réservoir 3, en amont de celui-ci en ce qui concerne la circulation du liquide de refroidissement.

Le quatrième échangeur de chaleur 24 est relié à un actionneur d'une pompe de circulation 25 de liquide de refroidissement. L'actionneur est relié à une sortie d'échappement dans l'atmosphère ambiante.

La sortie du réservoir de liquide de refroidissement comporte une dérivation, en parallèle de la pompe de circulation 6. Cette dérivation comporte la pompe de circulation 25.

En fonctionnement nominal de la presse et dans la première phase de fonctionnement du dispositif de refroidissement de secours, la vanne 21 est sous tension de sorte qu'elle est fermée. La première phase de fonctionnement du dispositif de refroidissement de secours selon ce mode de réalisation est identique à celle du dispositif de refroidissement de secours selon le premier mode de réalisation. Ainsi, c'est le gaz de l'enceinte de compression 1 qui permet le refroidissement et la circulation du liquide de refroidissement.

La deuxième phase de fonctionnement du dispositif est modifiée de la manière suivante. Lorsque la pression du gaz provenant de l'enceinte de compression devient inférieure à une valeur permettant l'actionnement de la pompe 6, par exemple 8 bars, la vanne 7 est mise sous tension pour être fermée et la vanne 21 est mise hors tension pour être ouverte. Ainsi, l'enceinte de compression est isolée du circuit de circulation de gaz du dispositif de refroidissement de secours, et l'air comprimé du réservoir 20 circule dans le circuit d'air comprimé. L'air comprimé arrive à l'échangeur de chaleur 23 en subissant une détente qui abaisse sa température, ce qui refroidit le liquide de refroidissement dans le réservoir 3.

L'air comprimé poursuit son parcours au travers de l'échangeur 24 et subir une deuxième détente ce qui permet un abaissement de la température du liquide de refroidissement en entrée de réservoir 3.

Une fois détendu, l'air comprimé est dirigé vers l'actionneur de la pompe de circulation 25 avant rejet à l'extérieur de l'installation. La pompe de circulation 25 provoque la circulation du liquide de refroidissement dans son circuit.

Ainsi dans la deuxième phase, l'air comprimé remplace le gaz inerte pour le refroidissement et la circulation du liquide de refroidissement, ce qui permet d'économiser le gaz.

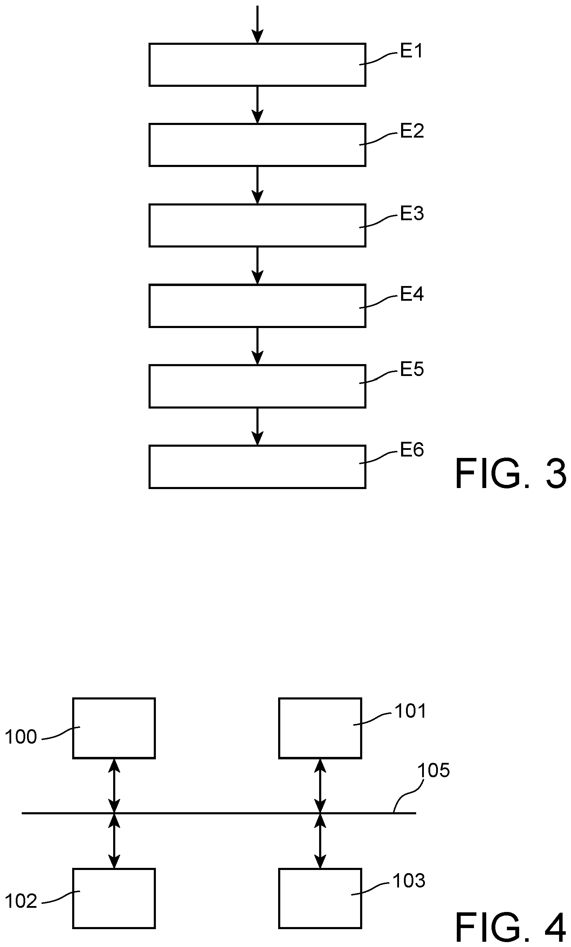

La **figure** 3 représente un procédé de refroidissement de secours destiné à une presse isostatique à chaud selon un mode de réalisation de l'invention. Le procédé est mis en œuvre dans le module de surveillance et de commande CMD et comporte des étapes E1 à E6.

L'étape E1 est la détection d'une alarme technique au cours du fonctionnement de la presse isostatique à chaud.

A l'étape suivante E2, le réservoir de gaz 14 est isolé du reste de l'installation.

L'étape suivante E3 est une temporisation.

Après cette temporisation, l'étape suivante E4 est la mise en communication de l'enceinte de compression 1 avec le circuit de circulation de gaz destiné au refroidissement de secours. Le gaz permet alors le refroidissement et la circulation du liquide de refroidissement.

Les étapes E1 à E4 correspondent à la première phase de fonctionnement du dispositif de refroidissement de secours, qui a été exposée plus haut.

L'étape suivante E5 est un test pour déterminer que la pression du gaz provenant de l'enceinte de compression 1 devient inférieure à une valeur permettant l'actionnement de la pompe 6, par exemple 8 bars.

Lorsque cette condition est réalisée, l'étape E5 est suivie de l'étape E6 à laquelle, selon un premier mode de réalisation, le réservoir 14 est mis en communication avec le circuit de circulation de gaz destiné au refroidissement de secours. Il s'agit donc de la deuxième phase de fonctionnement du dispositif de refroidissement de secours, qui a été exposée plus haut.

Selon un second mode de réalisation de l'étape E6, c'est le circuit d'air comprimé qui permet le refroidissement et la circulation du liquide de refroidissement.

La **figure 4** représente un mode de réalisation particulier de module de surveillance et de commande CMD, selon l'invention.

Le module de surveillance et de commande CMD a la structure générale d'un ordinateur. Il comporte notamment un processeur 100 exécutant un programme d'ordinateur mettant en œuvre le procédé précédemment décrit, une mémoire 101, une interface d'entrée 102 et une interface de sortie 103.

Ces différents éléments sont classiquement reliés par un bus 105.

L'interface d'entrée 102 est reliée aux différents capteurs équipant le presse isostatique à chaud et est destinée à recevoir des informations sur le fonctionnement de la presse.

Le processeur 100 exécute les traitements précédemment exposés. Ces traitements sont réalisés sous la forme d'instructions de code du programme d'ordinateur qui sont mémorisées par la mémoire 101 avant d'être exécutées par le processeur 100.

L'interface de sortie 103 délivre les instructions de commande des différentes vannes mises en œuvre dans le cadre de l'invention.

## Revendications

1. Dispositif de refroidissement de secours destiné à une presse isostatique à chaud, la presse comportant une enceinte de compression (1), un réservoir (14) d'un gaz et un premier circuit de circulation du gaz entre le réservoir de gaz et l'enceinte de compression,
**caractérisé en ce qu'**il comporte :
un réservoir (3) d'un liquide de refroidissement équipé d'un premier échangeur de chaleur (4) entre le gaz et le liquide de refroidissement,
un circuit de circulation du liquide de refroidissement formant une boucle fermée incluant le réservoir (3) et un circuit de refroidissement (17) disposé autour de l'enceinte de compression,
un second circuit de circulation du gaz, s'étendant à partir d'une vanne (8) de liaison au premier circuit de circulation du gaz, et incluant le premier échangeur de chaleur (4),
un module de commande (CMD) apte à piloter la vanne de liaison (8) pour l'ouvrir en cas de défaut de fonctionnement de la presse isostatique à chaud, et la fermer sinon.

2. Dispositif de refroidissement de secours destiné à une presse isostatique à chaud selon la revendication 1, **caractérisé en ce que** le circuit de circulation du liquide de refroidissement comporte en outre une première pompe de circulation (6) actionnée par la circulation du gaz dans le second circuit de circulation du gaz.

3. Dispositif de refroidissement de secours destiné à une presse isostatique à chaud selon la revendication 1 ou 2, **caractérisé en ce que** le module de commande pilote également la vanne de liaison (8) pour la fermer si la température du gaz au niveau de l'entrée du premier échangeur de chaleur (4) est inférieure à une première valeur prédéterminée.

4. Dispositif de refroidissement de secours destiné à une presse isostatique à chaud selon l'une quelconque des revendications 1 à 3, **caractérisé en ce que** le module de commande pilote également la vanne de liaison (8) pour l'ouvrir si la température du liquide de refroidissement autour de l'enceinte est supérieure à une deuxième valeur prédéterminée.

5. Dispositif de refroidissement de secours destiné à une presse isostatique à chaud selon l'une quelconque des revendications 1 à 4, **caractérisé en ce qu'**il comporte un second échangeur de chaleur (2) entre le gaz et le liquide de refroidissement, placé au niveau de l'entrée du circuit de circulation du liquide de refroidissement dans le réservoir (3) de liquide de refroidissement.

6. Dispositif de refroidissement de secours destiné à une presse isostatique à chaud selon l'une quelconque des revendications 1 à 5, **caractérisé en ce que** la vanne de liaison (8) est une vanne normalement ouverte.

7. Dispositif de refroidissement de secours destiné à une presse isostatique à chaud selon l'une quelconque des revendications 1 à 6, **caractérisé en ce que** le premier circuit de circulation du gaz comporte également une vanne (7) de sortie de l'enceinte de compression et une vanne (10) de sortie du réservoir de gaz, et **en ce que** le module de commande est apte à piloter la vanne (7) de sortie de l'enceinte de compression pour l'ouvrir et la vanne (10) de sortie du réservoir de gaz pour la fermer, en cas de défaut de fonctionnement de la presse isostatique à chaud et tant que la pression du gaz dans le second circuit de circulation du gaz est supérieure à une valeur prédéterminée.

8. Dispositif de refroidissement de secours destiné à une presse isostatique à chaud selon la revendication 7, **caractérisé en ce que** le module de commande est apte à piloter la vanne (7) de sortie de l'enceinte de compression pour la fermer et la vanne (10) de sortie du réservoir de gaz pour l'ouvrir, en cas de défaut de fonctionnement de la presse isostatique à chaud et lorsque la pression du gaz dans le second circuit de circulation du gaz est inférieure à la valeur prédéterminée.

9. Dispositif de refroidissement de secours destiné à une presse isostatique à chaud selon la revendication 7, **caractérisé en ce qu'**il comporte un circuit de circulation d'air comprimé comportant successivement un réservoir (20) d'air comprimé, une vanne (21) de sortie du réservoir d'air comprimé, un troisième échangeur de chaleur (23) dans le réservoir de liquide de refroidissement et un échappement, **en ce que** le module de commande est apte à piloter la vanne (7) de sortie de l'enceinte de compression pour la fermer et la vanne (21) de sortie du réservoir d'air comprimé pour l'ouvrir, en cas de défaut de fonctionnement de la presse isostatique à chaud et lorsque la pression du gaz dans le second circuit de circulation du gaz est inférieure à la valeur prédéterminée.

10. Dispositif de refroidissement de secours destiné à une presse isostatique à chaud selon la revendication 9, **caractérisé en ce qu'**il comporte un quatrième échangeur de chaleur (24) entre l'air comprimé et le liquide de refroidissement, placé au niveau de l'entrée du circuit de circulation du liquide de refroidissement dans le réservoir (3) de liquide de refroidissement.

11. Dispositif de refroidissement de secours destiné à une presse isostatique à chaud selon la revendication 9 ou 10, **caractérisé en ce que** le circuit de circulation du liquide de refroidissement comporte en outre une seconde pompe de circulation (25) actionnée par la circulation de l'air comprimé dans le circuit de circulation d'air comprimé.

12. Presse isostatique à chaud équipée d'un dispositif de refroidissement de secours selon l'une quelconque des revendications 1 à 11.

13. Procédé de refroidissement de secours destiné à une presse isostatique à chaud, la presse comportant une enceinte de compression (1), un réservoir (3) d'un gaz et un premier circuit de circulation du gaz entre le réservoir de gaz et l'enceinte de compression,
**caractérisé en ce qu'**il comporte des étapes de :
- détection (E1) d'une alarme technique au cours du fonctionnement de la presse isostatique à chaud,
- mise en communication (E4) de l'enceinte de compression (1) avec un second circuit de circulation de gaz, s'étendant à partir d'une vanne (8) de liaison au premier circuit de circulation du gaz, et incluant un premier échangeur de chaleur (4) disposé dans un réservoir d'un liquide de refroidissement, un circuit de circulation du liquide de refroidissement formant une boucle fermée incluant le réservoir (3) et un circuit de refroidissement (17) disposé autour de l'enceinte de compression.

14. Programme d'ordinateur comportant des instructions pour l'exécution des étapes du procédé selon la revendication 13 lorsque ledit programme est exécuté par un ordinateur.

15. Support d'enregistrement lisible par un ordinateur sur lequel est enregistré un programme d'ordinateur comprenant des instructions pour l'exécution des étapes du procédé selon la revendication 13.

## Patentansprüche

1. Notkühleinrichtung für eine heißisostatische Presse, wobei die Presse eine Druckkammer (1), einen Gasbehälter (14) und einen ersten Gasumwälzkreislauf zwischen dem Gasbehälter und der Druckkammer aufweist,
**dadurch gekennzeichnet, dass** sie enthält:
einen Behälter (3) für eine Kühlflüssigkeit, der mit einem ersten Wärmetauscher (4) zwischen Gas und Kühlflüssigkeit ausgestattet ist,
einen Kühlflüssigkeitsumwälzkreislauf, der eine geschlossene Schleife bildet, die den Behälter (3) und einen um die Druckkammer herum angeordneten Kühlkreislauf (17) umfasst,
einen zweiten Gasumwälzkreislauf, der sich von einem Ventil (8) zum Anschluss an den ersten Gasumwälzkreislauf erstreckt und den ersten Wärmetauscher (4) umfasst,
ein Steuermodul (CMD), das dazu geeignet ist, das Anschlussventil (8) anzusteuern, um es im Falle einer Fehlfunktion der heißisostatischen Presse zu öffnen und ansonsten zu schließen.

2. Notkühleinrichtung für eine heißisostatische Presse nach Anspruch 1, **dadurch gekennzeichnet, dass** der Kühlflüssigkeitsumwälzkreislauf ferner eine erste Umwälzpumpe (6) enthält, die durch die Umwälzung von Gas im zweiten Gasumwälzkreislauf betätigt wird.

3. Notkühleinrichtung für eine heißisostatische Presse nach Anspruch 1 oder 2, **dadurch gekennzeichnet, dass** das Steuermodul auch das Anschlussventil (8) ansteuert, um es zu schließen, wenn die Gastemperatur am Eingang des ersten Wärmetauschers (4) unter einem ersten vorbestimmten Wert liegt.

4. Notkühleinrichtung für eine heißisostatische Presse nach einem der Ansprüche 1 bis 3, **dadurch gekennzeichnet, dass** das Steuermodul auch das Anschlussventil (8) ansteuert, um es zu öffnen, wenn die Temperatur der Kühlflüssigkeit um die Kammer herum über einem zweiten vorbestimmten Wert liegt.

5. Notkühleinrichtung für eine heißisostatische Presse nach einem der Ansprüche 1 bis 4, **dadurch gekennzeichnet, dass** sie einen zweiten Wärmetauscher (2) zwischen Gas und Kühlflüssigkeit enthält, der am Einlass des Kühlflüssigkeitsumwälzkreislaufs in den Kühlflüssigkeitsbehälter (3) angeordnet ist.

6. Notkühleinrichtung für eine heißisostatische Presse nach einem der Ansprüche 1 bis 5, **dadurch gekennzeichnet, dass** das Anschlussventil (8) ein normal geöffnetes Ventil ist.

7. Notkühleinrichtung für eine heißisostatische Presse nach einem der Ansprüche 1 bis 6, **dadurch gekennzeichnet, dass** der erste Gasumwälzkreislauf auch ein Auslassventil (7) aus der Druckkammer und ein Auslassventil (10) aus dem Gasbehälter enthält, und dass das Steuermodul dazu geeignet ist, im Falle einer Fehlfunktion der heißisostatischen Presse und solange der Gasdruck im zweiten Gasumwälzkreislauf größer als ein vorbestimmter Wert ist, das Auslassventil (7) der Druckkammer anzusteuern, um es zu öffnen, und das Auslassventil (10) des Gasbehälters anzusteuern, um es zu schließen.

8. Notkühleinrichtung für eine heißisostatische Presse nach Anspruch 7, **dadurch gekennzeichnet, dass** das Steuermodul dazu geeignet ist, im Falle einer Fehlfunktion der heißisostatischen Presse und wenn der Gasdruck im zweiten Gasumwälzkreislauf niedriger als der vorbestimmte Wert ist, das Auslassventil (7) der Druckkammer anzusteuern, um es zu schließen, und das Auslassventil (10) des Gasbehälters anzusteuern, um es zu öffnen.

9. Notkühleinrichtung für eine heißisostatische Presse nach Anspruch 7, **dadurch gekennzeichnet, dass** sie einen Druckluftumwälzkreislauf enthält, der nacheinander einen Druckluftbehälter (20), ein Auslassventil (21) des Druckluftbehälters, einen dritten Wärmetauscher (23) im Kühlflüssigkeitsbehälter und eine Entlüftung umfasst, und dass das Steuermodul dazu geeignet ist, im Falle einer Fehlfunktion der heißisostatischen Presse und wenn der Gasdruck im zweiten Gasumwälzkreislauf niedriger als der vorbestimmte Wert ist, das Auslassventil (7) der Druckkammer anzusteuern, um es zu schließen, und das Auslassventil (21) des Druckluftbehälters anzusteuern, um es zu öffnen.

10. Notkühleinrichtung für eine heißisostatische Presse nach Anspruch 9, **dadurch gekennzeichnet, dass** sie einen vierten Wärmetauscher (24) zwischen Druckluft und Kühlflüssigkeit umfasst, der am Einlass des Kühlflüssigkeitsumwälzkreislaufs in den Kühlflüssigkeitsbehälter (3) angeordnet ist.

11. Notkühleinrichtung für eine heißisostatische Presse nach Anspruch 9 oder 10, **dadurch gekennzeichnet, dass** der Kühlflüssigkeitsumwälzkreislauf ferner eine zweite Umwälzpumpe (25) enthält, die durch die Umwälzung von Druckluft im Druckluftumwälzkreislauf betätigt wird.

12. Heißisostatische Presse, ausgestattet mit einer Notkühleinrichtung nach einem der Ansprüche 1 bis 11.

13. Notkühlverfahren für eine heißisostatische Presse, wobei die Presse eine Druckkammer (1), einen Gasbehälter (3) und einen ersten Gasumwälzkreislauf zwischen dem Gasbehälter und der Druckkammer aufweist,
**dadurch gekennzeichnet, dass** es die folgenden Schritte umfasst:
- Erkennen (E1) eines technischen Alarms während des Betriebs der heißisostatischen Presse,
- Verbinden (E4) der Druckkammer (1) mit einem zweiten Gasumwälzkreislauf, der sich ausgehend von einem Ventil (8) zum Anschluss an den ersten Gasumwälzkreislauf erstreckt und einen ersten Wärmetauscher (4) enthält, der in einem Behälter mit Kühlflüssigkeit angeordnet ist, wobei ein Kühlflüssigkeitsumwälzkreislauf eine geschlossene Schleife bildet, die den Behälter (3) und einen um die Druckkammer herum angeordneten Kühlkreislauf (17) umfasst.

14. Computerprogramm mit Anweisungen zur Ausführung der Schritte des Verfahrens nach Anspruch 13, wenn das Programm von einem Computer ausgeführt wird.

15. Computerlesbares Aufzeichnungsmedium, auf dem ein Computerprogramm aufgezeichnet ist, das Anweisungen zur Ausführung der Schritte des Verfahrens nach Anspruch 13 enthält.

## Claims

1. Back up cooling device intended for a hot isostatic press, the press including a compression chamber (1), a reservoir (14) of a gas and a first circulation circuit of the gas between the gas reservoir and the compression chamber,
**characterised in that** it includes:
a reservoir (3) of a cooling liquid provided with a first heat exchanger (4) between the gas and the cooling liquid,
a circulation circuit of the cooling liquid forming a closed loop including the reservoir (3) and a cooling circuit (17) disposed around the compression chamber,
a second circulation circuit of the gas, extending from a connecting valve (8) to the first circulation circuit of the gas, and including the first heat exchanger (4),
a control module (CMD) able to control the connecting valve (8) in order to open it in case of an operating fault of the hot isostatic press, and close it otherwise.

2. Back up cooling device intended for a hot isostatic press according to claim 1, **characterised in that** the circulation circuit of the cooling liquid further includes a first circulation pump (6) actuated by the circulation of the gas in the second circulation circuit of the gas.

3. Back up cooling device intended for a hot isostatic press according to claim 1 or 2, **characterised in that** the control module also controls the connecting valve (8) to close it if the temperature of the gas at the inlet of the first heat exchanger (4) is less than a first predetermined value.

4. Back up cooling device intended for a hot isostatic press according to any of claims 1 to 3, **characterised in that** the control module also controls the connecting valve (8) to open it if the temperature of the cooling liquid around the chamber is greater than a second predetermined value.

5. Back up cooling device intended for a hot isostatic press according to any of claims 1 to 4, **characterised in that** it includes a second heat exchanger (2) between the gas and the cooling liquid, placed at the inlet of the circulation circuit of the cooling liquid in the reservoir (3) of cooling liquid.

6. Back up cooling device intended for a hot isostatic press according to any of claims 1 to 5, **characterised in that** the connecting valve (8) is a normally open valve.

7. Back up cooling device intended for a hot isostatic press according to any of claims 1 to 6, **characterised in that** the first circulation circuit of the gas also includes an outlet valve (7) of the compression chamber and an outlet valve (10) of the gas reservoir, and **in that** the control module is able to control the outlet valve (7) of the compression chamber to open it and the outlet valve (10) of the gas reservoir to close it, in case of an operating fault of the hot isostatic press and as long as the pressure of the gas in the second circulation circuit of the gas is greater than a predetermined value.

8. Back up cooling device intended for a hot isostatic press according to claim 7, **characterised in that** the control module is able to control the outlet valve (7) of the compression chamber to close it and the outlet valve (10) of the gas reservoir to open it, in case of an operating fault of the hot isostatic press and when the pressure of the gas in the second circulation circuit of the gas is less than the predetermined value.

9. Back up cooling device intended for a hot isostatic press according to claim 7, **characterised in that** it includes a circulation circuit of compressed air successively including a reservoir (20) of compressed air, an output valve (21) of the reservoir of compressed air, a third heat exchanger (23) in the reservoir of cooling liquid and an exhaust, **in that** the control module is able to control the outlet valve (7) of the compression chamber to close it and the outlet valve (21) of the reservoir of compressed air to open it, in case of an operating fault of the hot isostatic press and when the pressure of the gas in the second circulation circuit of the gas is less than the predetermined value.

10. Back up cooling device intended for a hot isostatic press according to claim 9, **characterised in that** it includes a fourth heat exchanger (24) between the compressed air and the cooling liquid, placed at the inlet of the circulation circuit of the cooling liquid in the reservoir (3) of cooling liquid.

11. Back up cooling device intended for a hot isostatic press according to claim 9 or 10, **characterised in that** the circulation circuit of the cooling liquid further includes a second circulation pump (25) actuated by the circulation of compressed air in the circulation circuit of compressed air.

12. Hot isostatic press provided with a backup cooling device according to any of claims 1 to 11.

13. Method of backup cooling intended for a hot isostatic press, the press including a compression chamber (1), a reservoir (3) of a gas and a first circulation circuit of the gas between the gas reservoir and the compression chamber,
**characterised in that** it includes steps of:
- detecting (E1) a technical alarm during the operation of the hot isostatic press,
- putting into communication (E4) the compression chamber (1) with a second circulation circuit of gas, extending from a connecting valve (8) to the first circulation circuit of the gas, and including a first heat exchanger (4) disposed in a reservoir of a cooling liquid, a circulation circuit of the cooling liquid forming a closed loop including the reservoir (3) and a cooling circuit (17) disposed around the compression chamber.

14. Computer program including instructions for the execution of the steps of the method according to claim 13 when said program is executed by a computer.

15. Computer-readable recording medium on which is recorded a computer program comprising instructions for the execution of the steps of the method according to claim 13.
